# EUROPEAN PATENT SPECIFICATION

(11) **EP 0 856 083 B1**
(45) Date of publication and mention of the grant of the patent: **15.11.2000**
(21) Application number: 96929933.8
(22) Date of filing: 06.09.1996
(51) Int. Cl.: D21H 21/14, B31F 1/12

(54) **METHOD OF CREPING A PAPER**
VERFAHREN ZUM KREPPEN VON PAPIER
PROCEDE DE CREPAGE DE PAPIER

(30) Priority: 07.09.1995 DE 19532908
(43) Date of publication of application: 05.08.1998
(73) Proprietor: BetzDearborn Inc, Trevose, PA 19053-6783 (US)
(72) Inventor: KNIGHT, Paul, Liverpool (GB); SHERIDAN, Geoffrey, Philip, Cheshire (GB)
(74) Representative: UEXKÜLL & STOLBERG
(86) International application number: PCT/US96/14305
(87) International publication number: WO 97/11223

(56) References cited:
- EP-A- 0 063 301
- EP-A- 0 739 709
- EP-A- 0 802 215
- US-A- 5 234 547
- US-A- 5 256 727
- US-A- 5 492 599
- US-A- 5 571 382

## Description

This invention relates to a method of creping a paper which comprises applying a creping aid composition directly to the creping drum (also known as Yankee or MG cylinder) in an apparatus for producing soft, lightweight paper web suitable for making sanitary paper products such as bathroom and facial tissue, paper towels and napkins.

In the manufacture of creped tissue products the paper web is passed over a rotating drying cylinder (creping drum) and removed and creped from the surface of the drying cylinder by the use of a creping blade often called a doctor blade. It is usual to adhere the paper web to the rotating drying cylinder by the application of adhesive chemicals directly onto the drying cylinder itself, e.g. by spraying. Creping adhesive chemicals which are widely used for this application include polyvinyl alcohols, poly (ethylene vinyl acetate) copolymers, polyvinyl acetate, polyacrylates and thermosetting cationic polyamides of the wet strength resin type which comprise the water-soluble reaction products of an epihalohydrin and a polyamide containing secondary amino groups. These chemicals may be used alone or in combination with each other in order to achieve the desired effect. Generally, these chemicals are used with a release agent in order to control the adhesion of the web to the cylinder surface.

US-A-5,234,547 discloses a method of creping a paper which comprises applying a synthetic anionic polymer to the creping drum prior to the application of the paper web to be creped. The polymers used are (meth)acrylate polymers and especially polymers of acrylic or methacrylic acid.

EP-A-0 063 301 relates to water-soluble polymers obtainable by reacting an optionally modified polyamidoamine and/or polyureaamine with a bifunctional dihaloalkylene derivative. This document further discloses the use of said polymers as creping additives in the manufacture of creped paper. The creping additives are preferably applied on the paper sheet prior to the contact with the heated surface of the creping drum.

EP-A-0 739 709, which was published after the priority date of the present patent, discloses a composition for creping fibrous webs comprising a polyamine/epihalohydrin resin creping adhesive and a creping release agent that is a plasticizer for the polyamine/epihalohydrin resin.

Most of these creping adhesive chemicals and particularly those polyamides of the wet strength resin type become crosslinked by the input of thermal energy and dehydration which occur on the surface of the drying cylinder. If this crosslinking is allowed to take place in an uncontrolled manner due to the variability of temperature and moisture contents found during the tissue making process, then the coating will become uneven and lead to runnability problems. The control of adhesion becomes even more difficult when the drying cylinder is at elevated temperatures, e.g. 140 to 150°C, since the coatings become more crosslinked. This results in harder, brittle and non-renewable coatings which will give reduced adhesion, reduced protection to both the creping blade and the cylinder and generally inferior tissue quality.

It has now been surprisingly found that the use of non-thermosettinc polyamidoamines which are crosslinked with an epihalohydrin when used alone or in combination with other polymers will provide superior and more controlled adhesion. In other words, when these polyamidoamines are applied to the drying cylinder, the paper web adheres better and in a more controlled uniform manner to the cylinder, even under variable and extreme conditions of cylinder temperature and sheet moisture content such that improved creping takes place.

Thus, the present invention provides a method of creping a paper which comprises applying directly to the surface of the creping drum a water-soluble, non-thermosetting polyamidoamine or modified polyamidoamine which is crosslinked with an epihalohydrin.

Prior to the present invention, only polyamidoamines or modified polyamidoamines which are thermosetting (crosslinkable) and are generally used as wet strength agents in paper making have been used as adhesion-improving agents in paper creping by direct application to the drying cylinder (see above). In contrast, according to the present invention, polyamidoamines or modified polyamidoamines which are crosslinked with an epihalohydrin are directly applied to the drying cylinder which are non-thermosetting (non-crosslinkable), i.e., they are essentially free of any functional groups which may result in crosslinking.

The polyamidoamines useful in the method of the present invention are prepared by the condensation of aliphatic, cycloaliphatic, araliphatic or heterocyclic (preferably aliphatic) polyamines containing at least two amino groups, at least one of which must be a primary amino group, with a saturated or unsaturated aliphatic or aromatic (preferably aliphatic) dicarboxylic acid having from 4 to 10 carbon atoms or their functional equivalents. To increase their molecular weight it is preferred to react the polyamidoamines or modified polyamidoamines with a substoichiometric amount of epihalohydrin. By using a substoichiometric amount, it is secured that the epihalohydrin completely reacts with the polyamidoamine or the modified polyamidoamine so that no further crosslinking can take place on the surface of the drying cylinder under the elevated temperature conditions. In case of incomplete reaction of the epihalohydrin or use of more than substoichiometric amounts of epihalohydrin any functional groups which remain after crosslinking and can result in further crosslinking under the elevated temperature conditions on the surface of the drying cylinder can be "neutralized" by reacting the crosslinked polyamidoamine or modified polyamidoamine with suitable agents. Any remaining free epoxy functionality of the epihalohydrin, which could lead to further crosslinking, can e.g. be removed by reacting the crosslinked polyamidoamine or modified polyamidoamine with an amine or ammonia.

Preferably, the polyamidoamines useful in the method of the present invention are obtained by the condensation of a dicarboxylic acid and an amine containing two primary amino groups and at least one secondary amino group, e.g., diethylenetriamine. The condensation results in polyamidoamines which contain about ten dicarboxylic acid derived units and the corresponding amount of amine derived units. In order to increase the molecular weight by crosslinking the condensation product is reacted with an epihalohydrin, preferably epichlorohydrin. However, in contrast to the preparation of conventional wet strength agents, the epihalohydrin is used in substoichiometric amounts to make sure that no free epoxy functionality is included in the crosslinked polyamidoamine which would make it crosslinkable and thus thermosetting.

Indeed it is known to use crosslinked polyamidoamines or modified polyamidoamines which are useful in the present invention as retention aids in the paper making process. However, such retention aids have never been used as adhesion-improving agents in paper creping for direct application to the surface of the drying cylinder.

In the prior art many modifications of thermosetting polyamidoamines useful as wet strength agents or non-thermosetting polyamidoamines useful as retention aids are described. All of these modified polyamidoamines are also useful in the method of the present invention as long as they are non-thermosetting, i.e. crosslinking of the polyamidoamines has been effected by the use of substoichiometric amounts of epihalohydrin or any functional crosslinkable groups remaining after crosslinking have been "neutralized" (see above). Examples for modifications of polyamidoamines are disclosed in US-A-4,501,862, DE-A-33 23 732, US-A-4,673,729, DE-C-24 34 816 (including DE-A-18 02 435 referred to in this document) and EP-A-74 558. Preferred modified polyamido amines are disclosed in DE-A-34 21 557. These are polyamidoaminepolyamines formed by transamidation of polyamidoamines with polyamines which are obtainable by reacting under substantially anhydrous conditions and at elevated temperatures of at least 150°C
(A) At least one water soluble or water dispersible polyamidoamine prepared by the condensation of:
   (1) at least one aliphatic, cycloaliphatic or araliphatic polyamine having at least two primary amino groups and at least one secondary or tertiary amino group or a mixture of said polyamine with at least one aliphatic, cycloaliphatic, araliphatic or heterocyclic polyamine containing two primary or two amino groups, each selected from primary or secondary amino groups, and
   (2) at least one C₄-C₁₀ aliphatic dicarboxylic acid or an amide forming derivative thereof; with
(B) a water soluble low molecular weight polyamine selected from (a) poly (C₂-C₃) alkylenepolyamines having at least two primary amino groups and a molecular weight of from about 150 to 3,000 or (b) reaction products of a low molecular weight amine selected from ammonia, a monoalkyl monoamine, a C₂-C₃ polyalkylene diamine, triamine tetramine or pentamine with a polyfunctional compound selected from epihalohydrin or alpha, omega-dihaloalkane, said amine and polyfunctional compound being reacted in amounts such that the ratio of amino nitrogen atom to polyfunctional compound is from about 0:5:1 to 30:1, the resultant reaction product has at least two primary amino groups and has a weight average molecular weight of from about 150 to 3,000.
and subsequently reacting the polymeric product of (A) and (B) with
(C) a compound which is polyfunctional with respect to amino groups contained in the product of (A) and (B). The preparation of the polyamidoamines or modified polyamidoamines useful in the method of the present invention is well known to a skilled man and described in detail in the prior art like the prior art documents cited above.

The molecular weight of the uncrosslinked polyamidoamines or modified polyamidoamines depends on the structure of the specific polyamidoamine or modified polyamidoamine and the particular properties desired for a specific type of paper. In general, the molecular weight is above 1,500. It has to be observed that the crosslinked polyamidoamine or modified polyamidoamine is still water-soluble.

The amounts of water-soluble, non-thermosetting polyamidoamines or modified polyamidoamines used in the method of the present invention also depend upon the nature of the tissue grade and softness characteristics to be obtained. In general, from 0.05 to 0.3 grams of polymer is required per square metre of surface of the drying cylinder. Typically the polymers are applied as aqueous solutions (preferably by spraying) containing about 5 to 50, generally 5 to 20, e.g. about 10% by weight of polymer.

The non-thermosetting polyamidoamines or modified polyamidoamines can be used in combination with other conventional polymers to give improved results and more reliable processing. Typically between 5 to 30% by weight can be added to other polymers like polyvinyl alcohol to enhance adhesion and overall coating performance.

Further, it is often advantageous to use the polyamidoamines or modified polyamidoamines useful in the method of the present invention together with usual release agents. These include imidazolines as well as oils such as mineral oils and other hydrophobic components including quaternary surfactants which have a softening effect on the paper web.

### Example

Different adhesion-improving agents were tested according to the following method:
(1) A 2 g dry weight polymer film was prepared by heating in a 7 cm diameter aluminum dish at 85°C for 12 hours.
(2) A wet cotton strip (4 cm x 4 cm) was applied to the surface and pressed for five (5) minutes using a 1 kg weight.
(3) Adhesiveness was measured by peeling off by hand at an angle of 180°. The degree of adhesiveness was recorded on a scale from 1 to 5 (1 being very adhesive and 5 being not adhesive at all).
(4) The film was then heated for a further 2 hours at 150°C and reassessed.

| Product | Adhesiveness | Chemical Type |
|---|---|---|
| A* | 3 | Polyamide (wet strength) |
| B* | 2 | Polyvinyl acetate (mol wt 500,000 to 1,500,000) |
| C* | 2 | Polyvinyl alcohol |
| D* | 4 | Methacrylic/acrylamide (1:2) |
| E | 1 | Modified polyamidoamine according to DE-A-34 21 557 |
| F | 1 | C/E (4:1) |

| | | |
|---|---|---|
| * Comparative examples | | |

More importantly, the films after subjection to 150°C remained uniform and flexible when products E and F were used while all others became brittle and broken.

## Claims

1. A method of creping a paper, comprising applying directly to the surface of a creping drum a water-soluble, non-thermosetting polyamidoamine or modified polyamidoamine which is crosslinked with an epihalohydrin.

2. The method as claimed in claim 1 characterized in that the epihalohydrin is epichlorohydrin.

3. The method as claimed in claim 1 characterized in that the water-soluble, non-thermosetting polyamidoamine is a polyamidoamine polyamine formed by transamidation of polyamidoamine with a polyamine.

4. The method as claimed in claim 1 characterized in that the temperature of the creping drum is between 100°C and 150°C.

5. The method as claimed in claim 1 characterized in that the temperature of the creping drum is between 130°C and 150°C.

6. The method as claimed in claim 1, further characterized in that a release agent is applied to the surface of the creping drum.

7. The method as claimed in claim 1, further characterized in that an adhesion-improving agent is applied to the surface of the creping drum.

## Patentansprüche

1. Verfahren zum Kreppen eines Papiers, bei dem ein mit einem Epihalohydrin vernetztes, wasserlösliches, nicht hitzehärtbares Polyamidoamin oder modifiziertes Polyamidoamin direkt auf die Oberfläche einer Krepptrommel gegeben wird.

2. Verfahren nach Anspruch 1, dadurch gekennzeichnet, dass das Epihalohydrin Epichlorhydrin ist.

3. Verfahren nach Anspruch 1, dadurch gekennzeichnet, dass das wasserlösliche, nicht hitzehärtbare Polyamidoamin ein durch Transamidierung von Polyamidoamin mit einem Polyamin gebildetes Polyamidoaminpolyamin ist.

4. Verfahren nach Anspruch 1, dadurch gekennzeichnet, dass die Temperatur der Krepptrommel zwischen 100 °C und 150 °C liegt.

5. Verfahren nach Anspruch 1, dadurch gekennzeichnet, dass die Temperatur der Krepptrommel zwischen 130 °C und 150 °C liegt.

6. Verfahren nach Anspruch 1, das weiterhin dadurch gekennzeichnet ist, dass ein Trennmittel auf die Oberfläche der Krepptrommel gegeben wird.

7. Verfahren nach Anspruch 1, das weiter dadurch gekennzeichnet ist, dass ein adhäsionsverbesserndes Mittel auf die Oberfläche der Krepptrommel gegeben wird.

## Revendications

1. Procédé de crêpage de papier, comprenant l'application, directement sur la surface d'un tambour de crêpage, de polyamido-amine modifiée ou de polyamide-amine non thermodurcissable, soluble dans l'eau, qui est réticulée avec une épihalohydrine.

2. Procédé selon la revendication 1, caractérisé en ce que l'épihalohydrine est de l'épichlorhydrine.

3. Procédé selon la revendication 1, caractérisé en ce que la polyamido-amine non thermodurcissable, soluble dans l'eau, est une polyamine polyamido-amine formée par une transamidation de la polyamido-amine avec une polyamine.

4. Procédé selon la revendication 1, caractérisé en ce que la température du tambour de crêpage est comprise entre 100 °C et 150 °C.

5. Procédé selon la revendication 1, caractérisé en ce que la température du tambour de crêpage est comprise entre 130 °C et 150 °C.

6. Procédé selon la revendication 1, caractérisé de plus en ce qu'un agent de libération est appliqué à la surface du tambour de crêpage.

7. Procédé selon la revendication 1, caractérisé de plus en ce qu'un agent d'amélioration de l'adhérence est appliqué à la surface du tambour de crêpage.
